# EUROPÄISCHE PATENTANMELDUNG

(11) **EP 1 039 112 A2**
(43) Veröffentlichungstag der Anmeldung: **27.09.2000**
(21) Anmeldenummer: 00102930.5
(22) Anmeldetag: 12.02.2000
(51) Int. Cl.: F02B 23/10, F02F 1/24

(54) **Brennstoffzuführungsystem für eine fremdgezündete Brennkraftmaschine**

(30) Priorität: 23.03.1999 DE 19912892; 23.09.1999 DE 19945544
(71) Anmelder: DaimlerChrysler AG, 70567 Stuttgart (DE)
(72) Erfinder: Frey, Jürgen, 73728 Esslingen (DE); Karl, Günter, Dr., 73732 Esslingen (DE); Krämer, Stephan, Dr., 71397 Leutenbach (DE)

(57) **Zusammenfassung**

Bekannte Brennstoffzuführsysteme besitzen ein Einblaseventil, das ein Brennstoff-Luft-Gemisch direkt in einen Brennraum abgeben kann. Werden aber große Einspritzmengen abverlangt, wie dies beispielsweise bei hohen Motorlasten der Fall ist, kann es zu Problemen bei der Güte der Gemischaufbereitung kommen.

Es wird ein Brennstoffzuführsystem für eine fremdgezündete Brennkraftmaschine vorgeschlagen, das zumindest ein in oder an einem Zylinderkopf angeordnetes Einblaseventil besitzt, dem Brennstoff und ein gasförmiges Medium unter Druck zugeführt wird, um mittels des Einblaseventils ein Brennstoff-Medium-Gemisch direkt in einen Brennraum der Brennkraftmaschine abzugeben. Erfindungsgemäß ist zumindest ein weiteres Einspritzventil vorgesehen, welches bei bestimmten Betriebsbereichen der Brennkraftmaschine zusätzlich zur Abgabe des Brennstoff-Medium-Gemisches mittels des Einblaseventils oder zeitweise anstelle der Abgabe des Brennstoff-Medium-Gemisches mittels des Einblaseventils Brennstoff in einen Ansaugbereich der Brennkraftmaschine abgibt.

Das erfindungsgemäße Brennstoffzuführsystem ist für fremdgezündete Brennkraftmaschinen vorgesehen.

## Beschreibung

Die Erfindung betrifft ein Brennstoffzuführsystem für eine fremdgezündete Brennkraftmaschine nach der Gattung des Anspruchs 1 bzw. 2 sowie ein Verfahren zum Betrieb einer Brennkraftmaschine mit einem solchen Brennstoffzuführ-system.

Es ist bereits ein Brennstoffzuführsystem bekannt, (EP 0 308 467 B1), das eine an einem Zylinderkopf angebrachte Verteilerleiste besitzt, in welchem sowohl Brennstoff als auch Luft unter Druck zu im Zylinderkopf untergebrachten Einblaseventilen geführt wird. Hierzu sind in der Verteilerleiste entsprechende Brennstoffleitungen und Luftleitungen zu den Einblaseventilen vorgesehen. Jedes Einblaseventil weist ein in konventioneller Weise aufgebautes, elektromagnetisch betätigbares Brennstoffeinspritzventil auf, das Brennstoff in eine innerhalb des Einblaseventils vorgesehene Gemischbildungskammer abgeben kann. Der in der Gemischbildungskammer befindliche Brennstoff wird anschließend mit komprimierter Luft aufbereitet und in der Gemischbildungskammer teilweise verdampft. Der so aufbereitete Brennstoff gelangt weiter in einen Abgabebereich des Einblaseventils, der ein elektromagnetisch betätigbares Ventil aufweist. In einer Offenstellung eines Ventilschließkörpers des elektromagnetisch betätigbaren Ventils des Abgabebereichs wird das in der Gemischbildungskammer befindliche Brennstoff-Luft-Gemisch anschließend mit relativ niedrigem Druck von beispielsweise 7 bis 8 bar aus einer Austrittsöffnung des Einblaseventils direkt in die Brennkammer ausgeblasen. Der Verteiler ist sowohl für die Brennstoff- als auch für die Luftversorgung der Einblaseventile vorgesehen.

Werden von dem bakannten Brennstoffzuführsystem bzw. von dem Einblaseventil aber große Einspritzmengen abverlangt, wie dies beispielsweise bei hohen Motorlasten der Fall ist, kann es zu Problemen bei der Güte der Gemischaufbereitung kommen, da das Einblaseventil nur eine bestimmte maximale Brennstoffmenge mit guter Aufbereitung bereitstellen kann. Dieselbe Problematik liegt auch bei einem Brennstoffzuführsystem vor, das über Direkteinspritzventile für die Benzin-Direkteinspritzung verfügt. Direkteinspritzventile geben den Brennstoff mit relativ hohem Druck in direkter Weise in Form einer Brennstoffwolke bestehend aus feinsten Tröpfchen in einen Brennraum der Brennkraftmaschine ab. Bei abverlangten höheren Brennstoffmengen ergibt sich aber keine vollständige Aufbereitung des vom Direkteinspritzventil abgegebenen Brennstoffs und keine optimale Luftausnutzung im Brennraum. Auch bei Einblaseventilen läßt sich keine vollständige Aufbereitung des vom Einblaseventil abgegebenen Brennstoff-Luft-Gemisches erhalten. All dies hat zur Folge, daß es zu einem Benetzen der Zylinderinnenwände und der Kolbenfläche mit Brennstoff kommen kann. Etwas derartiges führt aber zu einer unvollständigen Verbrennung des Brennstoffs im Brennraum, wodurch es zu einem Anstieg an schädlichen Bestandteilen im Abgas kommt. Besonders betroffen sind davon Brennkraftmaschinen, die über eine Aufladung der angesaugten Luft, zum Beispiel mittels Abgasturbolader, verfügen, da diese Brennkraftmaschinen bezogen auf das Zylindervolumen relativ hohe Einspritzmengen an Brennstoff benötigen.

Der vorliegenden Erfindung liegt die Aufgabe zugrunde, das gattungsgemäße Brennstoffzuführsystem derart weiterzubilden, daß in sämtlichen Betriebsbereichen eine hinsichtlich Verbrauch und Abgasemission optimale Gemischaufbereitung in der Brennkraftmaschine erfolgt.

Diese Aufgabe wird erfindungsgemäß durch ein Brennstoffzuführsystem mit den Merkmalen der Ansprüche 1 oder 2 gelöst. Desweiteren umfaßt die Erfindung ein Verfahren zum Betrieb einer Brennkraftmaschine mit dem erfindungsgemäßen Brennstoffzuführsystem mit den Merkmalen des Anspruchs 7.

Das erfindungsgemäße Brennstroffzuführsystem für eine fremdgezündete Brennkraftmaschine mit den Merkmalen des Anspruchs 1 bzw. 2 hat den Vorteil, daß auch hohe Leistungen im gesamten Drehzahlbereich von der Brennkraftmaschine bereitgestellt werden können, ohne dabei den Anteil an schädlichen Bestandteilen im Abgas wesentlich zu erhöhen.

Das erfindungsgemäße Brennstoffeinspritzsystem bietet die Möglichkeit, den zur Gemischbildung erforderlichen Brennstoff neben der direkten Abgabe in den Brennraum mittels des Einblaseventils in der einen Ausgestaltung oder mittels Direkteinspritzung in der anderen vorgesehenen Ausführungsform zusätzlich über den Ansaugbereich der Brennkraftmaschine zuzuführen. Eine Steuereinheit steuert dabei das dem Brennraum zugeordnete Ventil (Einblaseventil oder Direkteinspritzventil) und das zusätzliche Einspritzventil im Ansaugbereich in Abhängigkeit des Betriebsbereiches der Brennkraftmaschine und bestimmt deren jeweiligen Durchsatz. Besonders zweckmäßig wird dabei die zusätzliche Brennstoffabgabe und Zuführung über den Ansaugbereich im wesentlichen im höheren Lastbereich der Brennkraftmaschine vorgesehen. Aufgrund der vorgelagerten Kraftstoffabgabe im Ansaugbereich kann das zur direkten Brennstoffabgabe in den Brennraum vorgesehene Ventil mit einem günstigen Kleinst-/Größtmengenverhältnis (Spreizung) ausgebildet werden, da die pro Arbeitsspiel abzugebende Brennstoffmenge auf zwei Wegen zuführbar ist. Eine schädliche Absenkung des Kraftstoffdruckes bei ausschließlicher Direktabgabe in den Brennraum, der insbesondere im Niedriglastbereich schädlich ist, wird dabei verhindert und so insbesondere die Gemischbildung im wichtigen Niederlastbereich verbessert. Die zur direkten Brennstoffzufuhr in den Brennraum erforderlichen Bauteile des Brennstoffzuführsystems können dabei vorteilhaft auf geringere Gesamtmassendurchsätze bei Vollast ausgelegt werden, als dies bisher bei ausschließlicher Direkteinspritzung oder -einblasung der Fall war. Dies reduziert die Reibleistung in der Brennstoffpumpe und bei aufgeladenen Brennkraftmaschinen im Verdichter und führt daher zu einer Verringerung des Brennstoffverbrauchs. Bei dem erfindungsgemäßen Brennstoffzuführsystem mit einem Einblaseventil im Zylinderkopf kann das luftunterstützte Zuführsystem zusätzlich auf erhöhte Ausblasedrücke ausgelegt sein (mindestens 10 bar), wodurch eine freie Wahl des Einblaszeitpunktes möglich ist.

Besonders vorteilhaft ist, daß bei zeitweisem alleinigen Betrieb der Brennkraftmaschine mit einem Zusatzeinspritzventil eine Temperaturerhöhung an den Einblaseventilen bzw. an den Direkteinspritzventilen erzielt werden kann, da diese in dieser abgabefreien Zeit nicht mehr vom Brennstoff gekühlt werden, so daß es durch den dann stattfindenden Temperaturanstieg an den Einblaseventilen bzw. Direkteinspritzventilen zu einem Abbau eventuell vorhandener Ablagerungen kommt.

Durch die in den Unteransprüchen aufgeführten Maßnahmen sind vorteilhafte Weiterbildungen und Verbesserungen des im Anspruch 1 bzw. 2 angegebenen Brennstoffzuführsystems für eine fremdgezündete Brennkraftmaschine möglich.

Ausführungsbeispiele der Erfindung sind in der Zeichnung dargestellt und in der nachfolgenden Beschreibung näher erläutert. Es zeigen:
- Fig. 1: einen teilweisen Schnitt einer Brennkraftmaschine mit einem Brennstoffzuführsystem nach einem ersten erfindungsgemäßen Ausführungsbeispiel,
- Fig. 2: einen teilweisen Schnitt einer Brennkraftmaschine mit einem Brennstoffzuführsystem nach einem zweiten erfindungsgemäßen Ausführungsbeispiel,
- Fig. 3: ein Diagramm der von der Brennkraftmaschine abgegebenen Leistung aufgetragen über der Drehzahl,
- Fig. 4: ein Diagramm der Betriebsbereiche der Brennkraftmaschine mit unterschiedlichen Betriebsmodi.

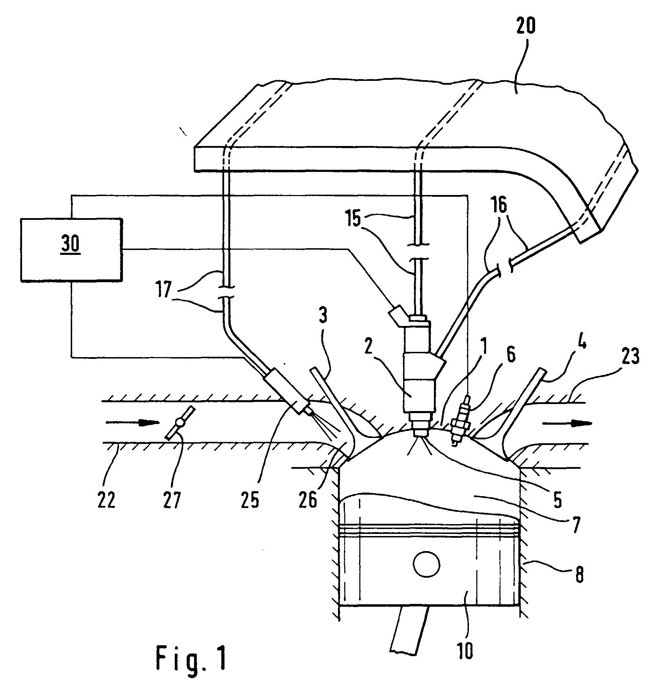

Die Fig. 1 zeigt einen Schnitt durch eine Brennkraftmaschine nach einem ersten erfindungsgemäßen Ausführungsbeispiel. Die Brennkraftmaschine besitzt einen Zylinderkopf 1, in welchem ein Einblaseventil 2 untergebracht ist. Das Einblaseventil 2 weist in bekannter Weise ein nicht näher dargestelltes, elektromagnetisch betätigbares Brennstoffeinspritzventil auf, das Brennstoff in eine Gemischbildungskammer oder in einen Gemischbildungsbereich im Innern des Einblaseventils 2 abgeben kann. In der Gemischbildungskammer bzw. im Gemischbildungsbereich wird der vom nicht näher dargestellten Brennstoffeinspritzventil abgegebene Brennstoff und ein in die Gemischbildungskammer bzw. in den Gemischbildungsbereich unter Druck zugeführtes gasförmiges Medium anschließend gemischt, um so den Brennstoff in der Gemischbildungskammer bzw. im Gemischbildungsbereich teilweise verdampfen zu können. Der so aufbereitete Brennstoff gelangt danach, gesteuert über ein weiteres, nicht näher dargestelltes, elektromagnetisch oder piezoelektrisch betätigbares Ventil, in Form eines Brennstoff-Medium-Gemisches aus einer Austrittsöffnung 5 des Einblaseventils 2 direkt in den Brennraum 7 eines Zylinders 8 der Brennkraftmaschine. In dem Zylinder 8 ist in bekannter Weise ein Kolben 10 bewegbar untergebracht. Zur Zündung des im Brennraum 7 eingeschlossenen Brennstoff-Medium-Gemisches ist eine Zündkerze 6 vorgesehen. Bei dem gasförmigen Medium kann es sich um Luft oder um Luft mit vermischtem Abgas oder aber auch um Luft mit vermischtem Brennstoff handeln. Es liegt somit eine Brennkraftmaschine mit innerer Gemischbildung in Verbindung mit einem luftunterstützten Einspritzsystem vor. Der Aufbau und die Betriebsweise derartiger Einblaseventile ist dem Fachmann zum Beispiel auch aus dem SAE-Paper 98P-136, 1988, Rodney Houston, Geoffrey Cathcart, Orbital Engine Company, Perth, Western Australia, "Combustion and Emissions Characteristics of Orbital's Combustion Process Applied to Multi-Cylinder Automotive Direct Injected 4-Stroke Engines", Seiten 1 - 12, hinreichend bekannt.

Die Brennstoffzufuhr zu dem Einblaseventil 2 erfolgt an einem Brennstoffanschluß 15 des Einblaseventils 2 zum Beispiel über einen Verteiler 20 (fuel/air-rail). In den Verteiler 20 wird über eine nicht näher dargestellte Brennstoffpumpe Brennstoff aus einem nicht näher dargestellten Brennstofftank gefördert. Die Zufuhr des gasförmigen Mediums zu dem Einblaseventil 2 erfolgt an einem Mediumanschluß 16 des Einblaseventils 2, beispielsweise ebenfalls über den Verteiler 20. Das gasförmige Medium wird über einen nicht näher dargestellten Verdichter in den Verteiler 20 gefördert, der das verdichtete Medium auf die einzelnen Einblaseventile 2 verteilt.

Der Brennraum 7 wird von dem Kolben 10 und dem Zylinderkopf 1 begrenzt. Über beispielsweise ein einzelnes Einlaßventil 3 der Brennkraftmaschine wird beim Ansaugtakt Luft aus einem Ansaugrohr 22 in den Brennraum 7 angesaugt. Nach der Verbrennung werden die Abgase über zum Beispiel ein einzelnes Auslaßventil 4 in ein Abgasrohr 23 abgegeben. Selbstverständlich können zwei oder mehr Einlaßventile 3 und zwei oder mehr Auslaßventile 4 pro Zylinder 8 vorgesehen sein.

Bei der Brennkraftmaschine kann es sich um eine aufgeladene Brennkraftmaschine handeln, bei welcher Luft unter Druck in das Ansaugrohr 22 der Brennkraftmaschine gefördert wird. Hierzu kann beispielsweise ein Abgasturbolader verwendet werden.

Erfindungsgemäß verfügt die Brennkraftmaschine über zumindest ein Zusatzeinspritzventil 25, das Brennstoff in einen Ansaugbereich 26 der Brennkraftmaschine abgeben kann. Bei dem Zusatzeinspritzventil 25 kann es sich um ein konventionelles, beispielsweise elektromagnetisch betätigbares Niederdruck-Einspritzventil 25 bekannter Bauart handeln. Der Ansaugbereich 26 wird vom Inneren des Ansaugrohres 22 gebildet, in welchem Luft und der vom Zusatzeinspritzventil 25 abgegebene Brennstoff bei offenem Einlaßventil 3 in den Brennraum 7 strömen kann. Der Brennstoff wird vom Zusatzeinspritzventil 25 zum Beispiel in Richtung des Einlaßventils 3 der Brennkraftmaschine abgegeben. Das Zusatzeinspritzventil 25 befindet sich beispielsweise stromab einer drehbar in das Ansaugrohr 22 untergebrachten Drosselklappe 27 und ist zur Brennstoffversorgung über seinen Brennstoffanschluß 17 beispielsweise auch an den Verteiler 20 angeschlossen. Es ist möglich, für jeden Zylinder 8 der Brennkraftmaschine jeweils ein Zusatzeinspritzventil 25 vorzusehen. Diese können direkt in den Einlaßkanälen angeordnet sein. Dem Fachmann ist diese Einspritzweise unter dem Begriff der Multipoint-Einspritzung hinreichend bekannt. Möglich ist aber auch, nur ein einzelnes Zusatzeinspritzventil 25 für alle oder zumindest für eine Teilanzahl der Zylinder 8 einer mehrzylindrigen Brennkraftmaschine vorzusehen. Das Zusatzeinspritzventil 25 gibt dabei den Brennstoff stromauf einer Verzweigung des Ansaugrohres 22 für die einzelnen Zylinder 8 in das noch unverzweigte Ansaugrohr 22 ab, der sich anschließend in den Verzweigungen auf die einzelnen Zylinder 8 gleichmäßig aufteilt. Dem Fachmann ist diese Einspritzweise unter dem Begriff der Singlepoint-Einspritzung hinreichend bekannt.

Die Abgabe von Brennstoff mittels des Zusatzeinspritzventils 25 ist erfindungsgemäß zusätzlich zur Abgabe des Brennstoff-Medium-Gemisches mittels des Einblaseventils 2 vorgesehen. Die Abgabe von zusätzlichem Brennstoff mit dem Zusatzeinspritzventil 25 ist dabei im wesentlichen im oberen Teillastbereich bis einschließlich der Vollast der Brennkraftmaschine vorgesehen. Die zusätzliche Abgabe von Brennstoff kann über den gesamten Drehzahlbereich der Brennkraftmaschine durchgeführt werden, sobald höhere Lasten von der Brennkraftmaschine abverlangt werden. Über ein elektronisches Steuergerät 30 kann die Steuerung der Brennstoffabgabe des Zusatzeinspritzventils 25 und des Einblaseventils 2 abhängig von Betriebsparametern der Brennkraftmaschine durchgeführt werden. Vorgesehen ist aber auch, zeitweise einen alleinigen Betrieb der Brennkraftmaschine durch Abgabe von Brennstoff mittels des Zusatzeinspritzventils 25 durchzuführen. Das Einblaseventil 2 gibt in dieser Zeit kein Brennstoff-Medium-Gemisch ab, mit der Folge, daß das Einblaseventil 2 nicht von Brennstoff durchströmt und gekühlt wird, so daß es zu einer Temperaturerhöhung am Einblaseventil 2 aufgrund der weiterhin stattfindenden Verbrennung im Brennraum 7 kommt. Der zeitweise alleinige Betrieb mit dem Zusatzeinspritzventil 25 ermöglicht eine Reinigung des Einblaseventils 2 von Ablagerungen, da Verkokungen oder dergleichen durch die relativ hohe Temperatur am Einblaseventil 2 abgebrannt werden. Der Betrieb der Brennkraftmaschine mit ausschließlicher Brennstoffzufuhr kann für vorgegebene Reinigungsintervalle turnusmäßig unabhängig vom vorliegenden Lastbereich vorgesehen sein.

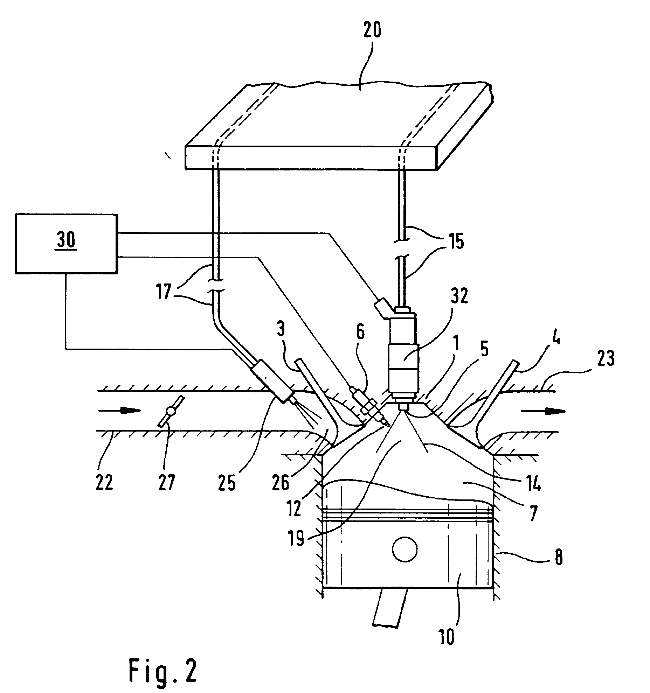

Die Fig. 2 zeigt einen Schnitt durch eine Brennkraftmaschine nach einem zweiten erfindungsgemäßen Ausführungsbeispiel, bei dem alle gleichen oder gleichwirkenden Teile mit denselben Bezugszeichen des ersten Ausführungsbeispiels nach Fig. 1 gekennzeichnet sind. In Abwandlung zum ersten Ausführungsbeispiel besitzt die Brennkraftmaschine kein Einblaseventil 2, sondern ist anstelle des Einblaseventils 2 mit einem Direkteinspritzventil 32 zur Benzin-Direkteinspritzung ausgestattet. Die Abgabe von zusätzlichem Brennstoff mittels des Zusatzeinspritzventils 25 ist dabei in gleicher Weise wie beim ersten Ausführungsbeispiel vorgesehen. Bei dem Direkteinspritzventil 32 wird der Brennstoff mit relativ hohem Druck von etwa 70 bar oder mehr in direkter Weise in Form einer Brennstoffwolke bestehend aus feinsten Tröpfchen in den Brennraum 7 des Zylinders 8 der Brennkraftmaschine abgegeben. Die Zündung des in den Brennraum 7 eingebrachten Brennstoffs erfolgt in bekannter Weise über die Zündkerze 6. Die Zündelektroden 12 der Zündkerze befinden sich dabei in unmittelbarer Nähe eines äußeren Randes 14 eines vom Direkteinspritzventil 32 abgegebenen Kegelstrahls 19 oder teilweise in dem Kegelstrahl 19. Bei dem Kegelstrahl 19 kann es sich um einen Hohlkegelstrahl oder um einen Vollkegelstrahl handeln. Das Direkteinspritzventil kann dabei elektromagnetisch oder piezoelektrisch betätigbar sein. Der Aufbau und die Wirkungsweise derartiger Ventile 32 ist dem Fachmann zum Beispiel aus der DE 195 48 526 A1 bekannt. Es ist auch möglich, im Unterschied zur Darstellung in Fig. 2 das Direkteinspritzventil 32 nicht zentral, sondern in seitlicher Lage anzuordnen, so daß eine seitliche Einspritzung in den Brennraum 7 erfolgt. Die Zündkerze befindet sich dabei dann zum Beispiel in zentraler, insbesondere senkrechter Lage im Brennraum 7.

Bei einem Einsatz eines Direkteinspritzventils 32 kann der Mediumabschluß 16 nach Fig. 1 entfallen, da derartige Ventile lediglich einen Brennstoffanschluß 15 benötigen. In gleicher Weise wie bei dem beschriebenen Einblaseventil 2 kann auch hier ein gemeinsamer Verteiler 20 (Common-Rail) zur Brennstoffversorgung der einzelnen Direkteinspritzventile 32 vorgesehen werden.

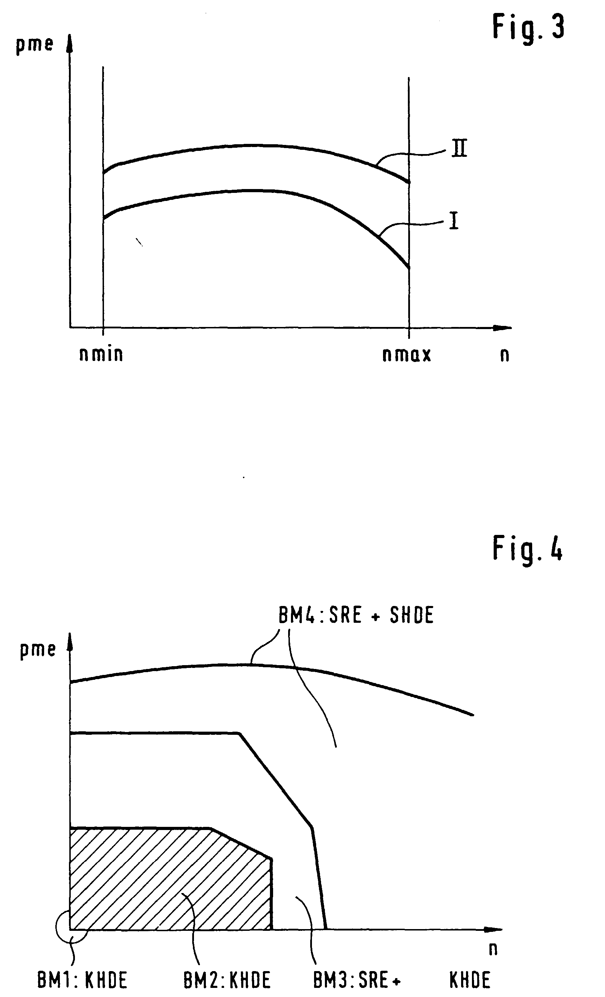

Die Fig. 3 zeigt ein Diagramm der Leistungsabgabe der Brennkraftmaschine pme aufgetragen über der Drehzahl n. nmin stellt dabei die Minimaldrehzahl und nmax die Maximaldrehzahl der Brennkraftmaschine dar. Die Linie I zeigt den Verlauf der maximal möglichen Leistungsabgabe der Brennkraftmaschine, die bei einer Brennstoffabgabe mit nur dem Einblaseventil 2 oder mit nur dem Direkteinspritzventil 32 erzielt werden kann. Die Linie II zeigt den Verlauf der maximal möglichen Leistungsabgabe der Brennkraftmaschine, die mit der Abgabe des Brennstoff-Medium-Gemisches des Einblaseventils 2 oder des Direkteinspritzventils 32 und mit der zusätzlichen Saugrohreinspritzung mittels des Zusatzeinspritzventils 25 möglich ist. Wie die Linie II zeigt, läßt sich mit der zusätzlichen Einspritzung des Zusatzeinspritzventils 25 eine über die Drehzahl im wesentlichen gleichmäßige Steigerung der Leistung der Brennkraftmaschine erzielen.

Mit dem erfindungsgemäßen Brennstoffzuführsystem stehen zum Betrieb der Brennkraftmaschine zwei Prinzipien zur Gemischbildung zur Verfügung, nämlich zum einen die innere Gemischbildung mit direkter Brennstoffabgabe in den Brennraum und andererseits die Zuführung außerhalb des Brennraumes aufbereiteten Gemisches mittels Saugrohreinspritzung. Durch Kombination der Gemischbildungsprinzipien ist in jedem Betriebsbereich der Brennkraftmaschine eine optimale Gemischbildung realisierbar im Hinblick auf niedrige Schadstoffemissionen und geringen Kraftstoffverbrauch. Dabei ist insbesondere in höheren Lastbereichen die zusätzliche Gemischzuführung über den Ansaugbereich vorgesehen. In den unteren Lastbereichen wird innere Gemischbildung bevorzugt, wobei mittels Kraftstoffzumessung während des Kompressionstaktes geschichtete Gemischbildung erfolgt. Im Schichtladungsberieb kann die Brennkraftmaschine weitgehend ungedrosselt und über die Brennstoffmenge qualitätsgeregelt betrieben werden, wobei Vorteile im Kraftstoffverbrauch erzielt werden.

Fig. 4 zeigt in einem Diagramm mit der über der Drehzahl n der Brennkraftmaschine aufgetragenen Brennstoffmenge pme ein Beispiel für verschiedene Betriebsmodi der Brennkraftmaschine, bei denen innere Gemischbildung KHDE, SHDE und Saugrohreinspritzung SRE entsprechend dem Lastbereich kombiniert sind. Im Leerlaufbereich BM1 sowie im Niedriglastbereich BM2 der Brennkraftmaschine ist ein Schichtladungsbetrieb mit innerer Gemischbildung vorgesehen. Im Schichtladungsbetrieb wird im Brennraum eine geschichtete Gemischwolke mit örtlich unterschiedlichen Brennstoffkonzentrationen gebildet. Die Gemischwolke wird einem örtlichen Bereich mit zündfähiger Gemischzusammensetzung gezündet, wodurch die Brennkraftmaschine insgesamt mit magerer Gemischbildung und geringem Kraftstoffverbrauch betrieben wird.

Im mittleren Lastbereich BM3 ist zusätzlich zur inneren Gemischbildung die Zuführung mageren homogenen Gemisches über den Ansaugbereich der Brennkraftmaschine vorgesehen. Das durch Saugrohreinspritzung SRE mittels des Zusatzeinspritzventils gebildete Gemisch wird im Brennraum durch die direkt eingebrachte Brennstoffmenge auf ein zündfähiges Maß angereichert. Die direkte Abgabe von Brennstoff mittels Kraftstoffeinspritzung oder Gemischeinblasung erfolgt während des Kompressionstaktes KHDE in geringem Abstand vor dem Zündzeitpunkt. Durch das direkt dem Brennraum zugeordnete Ventil, das heißt dem Einblaseventil oder dem Direkteinspritzventil, erfolgt also eine Zündeinspritzung einer Brennstoffmenge zur örtlichen Gemischanfettung. Auf diese Weise ist im mittleren Lastbereich BM3 eine sehr magere Verbrennung im Zusammenhang mit einer späten Zündeinleitung möglich. Eine weitere Abmagerung des Gemisches wird durch Aufladung erzielt. Mit der kombinierten Gemischbildung mit Saugrohreinspritzung SRE und innerer Gemischbildung mit Kraftstoffabgabe während des Kompressionstaktes KHDE können niedrige Stickoxidemissionen erreicht werden, wie sie bei bisherigen Verfahren zur inneren Gemischbildung nur mit Abgasrückführung erreichbar waren. Mit dem erfindungsgemäßen Brennstoffzuführsystem können somit aufgrund der möglichen Reduzierung der Abgasrückführungsrate bzw. Verzicht auf Abgasrückführung Vorteile im Instationärbetrieb der Brennkraftmaschine erreicht werden. Desweiteren tritt in diesem Betriebsmodus BM3 der Brennkraftmaschine mit kombinierter Gemischbildung SRE + KHDE eine Absenkung der Abgastemperatur ein, wodurch die Wirksamkeit einer Abgasnachbehandlung bei magerer Verbrennung erheblich gesteigert wird.

Im Hochlastbereich BM4 erfolgt die Gemischbildung über Saugrohreinspritzung SRE und direkte Kraftstoffabgabe in den Brennraum während des Ansaugtaktes SHDE, wobei im Brennraum homogenes Gemisch gebildet wird. Möglich ist dabei auch, die homogene Brennraumladung ausschließlich über Saugrohreinspritzung SRE aufzubereiten.

Die Kombination von Saugrohreinspritzung und innerer Gemischbildung gestattet auch im Falle eines Ausfalls insbesondere der Direkteinspritzventile den Betrieb des Motors in einem im Steuergerät abgelegten Notbetriebsmodus. Damit ist für einen zuverlässigen Motorbetrieb eine zusätzliche Sicherheit gegeben.

## Patentansprüche

1. Brennstoffzuführsystem für eine fremdgezündete Brennkraftmaschine, das zumindest ein in oder an einem Zylinderkopf (1) angeordnetes Einblaseventil (2) besitzt, dem Brennstoff und ein gasförmiges Medium unter Druck zugeführt wird, um mittels des Einblaseventils (2) ein Brennstoff-Medium-Gemisch direkt in einen Brennraum (7) der Brennkraftmaschine abzugeben,
dadurch gekennzeichnet, daß zumindest ein weiteres Einspritzventil (25) in einem Ansaugbereich (26) der Brennkraftmaschine zur zusätzlichen Brennstoffabgabe vorgesehen ist, wobei das Einblaseventil (2) und das Einspritzventil (25) im Ansaugbereich (26) einem gemeinsamen Steuergerät zugeordnet sind und aufeinander abgestimmt freigebbar sind.

2. Brennstoffzuführsystem für eine fremdgezündete Brennkraftmaschine, das zumindest ein in oder an einem Zylinderkopf (1) angeordnetes Direkteinspritzventil (32) besitzt, dem Brennstoff unter Druck zugeführt wird, um mittels des Direkteinspritzventils (32) Brennstoff direkt in einen Brennraum (7) der Brennkraftmaschine abzugeben,
dadurch gekennzeichnet, daß zumindest ein weiteres Einspritzventil (25) in einem Ansaugbereich (26) der Brennkraftmaschine zur zusätzlichen Brennstoffabgabe vorgesehen ist, wobei das Direkteinspritzventil (32) und das Einspritzventil (25) im Ansaugbereich (26) einem gemeinsamen Steuergerät zugeordnet sind und aufeinander abgestimmt freigebbar sind.

3. Brennstoffzuführsystem nach Anspruch 1 oder 2,
dadurch gekennzeichnet, daß es sich um eine aufgeladene Brennkraftmaschine handelt, bei welcher Luft unter Druck in den Ansaugbereich (26) der Brennkraftmaschine gefördert wird.

4. Brennstoffzuführsystem nach Anspruch 1 oder 2,
dadurch gekennzeichnet, daß pro Zylinder (8) der Brennkraftmaschine jeweils ein Einspritzventil (25) vorgesehen ist (Multipoint-Einspritzung).

5. Brennstoffzuführsystem nach Anspruch 1 oder 2,
dadurch gekennzeichnet, daß für alle Zylinder (8) der Brennkraftmaschine ein gemeinsames Einspritzventil (25) vorgesehen ist (Singlepoint-Einspritzung).

6. Brennstoffzuführsystem nach Anspruch 1 oder 2,
dadurch gekennzeichnet, daß der Ansaugbereich (26) vom Inneren eines Ansaugrohres (22) gebildet ist.

7. Verfahren zum Betrieb einer fremdgezündeten Brennkraftmaschine mit einem Brennstoffzuführsystem nach Anspruch 1 oder 2,
dadurch gekennzeichnet, daß das Steuergerät (30) das dem Brennraum (7) zugeordnete Ventil (2, 32) und das zusätzliche Einspritzventil (25) im Ansaugbereich (26) in Abhängigkeit des Betriebsbereiches der Brennkraftmaschine ansteuert und deren jeweiligen Durchsatz bestimmt.

8. Verfahren nach Anspruch 7,
dadurch gekennzeichnet, daß im gesamten Lastbereich der Brennkraftmaschine die Abgabe von Brennstoff mittels des Einspritzventils (25) vorgesehen ist und dem Brennraum (7) zusätzliches Brennstoffgemisch (SRE) über den Ansaugbereich (26) zugeführt wird.

9. Verfahren nach Anspruch 7,
dadurch gekennzeichnet, daß die Abgabe von Brennstoff mittels des Einspritzventils (25) und die zusätzliche Gemischzuführung (SRE) über den Ansaugbereich (26) zum Brennraum (7) im wesentlichen in höheren Lastbereichen der Brennkraftmaschine vorgesehen ist.

10. Verfahren nach Anspruch 8 oder 9,
gekennzeichnet durch einen Schichtladungsbetrieb der Brennkraftmaschine im Leerlaufbereich und in unteren bis mittleren Lastbereichen, wobei das dem Brennraum (7) zugeordnete Ventil (2, 32) zum direkten Brennstoffeintrag (KHDE) im Brennraum (7) während des Kompressionstaktes des jeweiligen Zylinders (8) geöffnet wird.

11. Verfahren nach Anspruch 10,
dadurch gekennzeichnet, daß im Leerlaufbereich und in unteren Lastbereichen die Gemischbildung überwiegend oder ausschließlich über direkte Zumessung im Brennraum (7) während des Kompressionstaktes erfolgt.

12. Verfahren nach Anspruch 10 oder 11,
dadurch gekennzeichnet, daß in mittleren Lastbereichen ein mageres Brennstoffgemisch über den Ansaugbereich (26) zugeführt und durch direkte Zumessung (KHDE) während des Kompressionstaktes im Brennraum ein geschichtetes, zündfähiges Gemisch gebildet wird.

13. Verfahren nach einem der Ansprüche 7 bis 12,
dadurch gekennzeichnet, daß in höheren Lastbereichen ein direkter Brennstoffeintrag (SHDE) in den Brennraum (7) während des Ansaugtaktes des jeweiligen Zylinders (8) erfolgt.

14. Verfahren nach Anspruch 13,
dadurch gekennzeichnet, daß in höheren Lastbereichen der Brennkraftmaschine bis zur Vollast direkter Brennstoffeintrag (SHDE) und zusätzliche Brennstoffzuführung (SRE) über den Ansaugbereich (26) vorgesehen ist.

15. Verfahren nach einem der Ansprüche 7 bis 12,
dadurch gekennzeichnet, daß in höheren Lastbereichen und bei Vollast der Brennkraftmaschine dem Brennraum (7) ausschließlich vom Einspritzventil (25) in den Ansaugbereich (26) abgegebener Brennstoff zugeführt wird.

16. Verfahren nach einem der Ansprüche 7 bis 15,
dadurch gekennzeichnet, daß die Brennkraftmaschine bedarfsweise für ein Reinigungsintervall unabhängig vom vorliegenden Lastbereich mit ausschließlicher Brennstoffzufuhr (SRE) über den Ansaugbereich (26) mittels Kraftstoffabgabe durch das Zusatzeinspritzventil (25) betrieben wird.
